# EUROPEAN PATENT APPLICATION

(11) **EP 1 661 445 A2**
(43) Date of publication of application: **31.05.2006**
(21) Application number: 04771726.9
(22) Date of filing: 17.08.2004
(51) Int. Cl.: A01D 34/76

(54) **PORTABLE POWERED CUTTER**

(30) Priority: 18.08.2003 JP 2003294151
(71) Applicant: Yamada Machinery Industrial Co., Ltd., Kobe-shi, Hyogo 652-0882 (JP)
(72) Inventor: YAMADA, Sakuji, Akashi-shi, Hyogo 6740057 (JP)
(74) Representative: Pluckrose, Anthony William
(86) International application number: PCT/JP2004/011765
(87) International publication number: WO 2005/016603

(57) **Abstract**

A portable powered cutter comprises an operation tube (10) , a transmission shaft (40) inserted through the operation tube (10), and a rotary blade (31) supported by a blade holder (30) connected to a forward end of the operation tube (10). The rotary blade (31) is rotated by rotational output of a power source transmitted by the transmission shaft (40). The blade holder (30) pivots, against a predetermined resistance, about a transverse axis (14) perpendicular to an axis of the operationtube (10) asviewedinplane. The transmission shaft (40) is flexible at least at a portion between the forward end of the operation tube (10) and the blade holder (30) , and the flexible portion of the transmission shaft (40) is inserted through a bellows (100).

## Description

### TECHNICAL FIELD

The present invention relates to a portable powered cutter used for cutting plants, such as weeds growing on the ground surface, at or near the roots.

### BACKGROUND ART

Such portable powered cutter includes an operation tube having a forward end provided with a rotary body that is rotated by rotation transmitted from a power source via a transmission shaft inserted through the operation tube. An example of the power source includes a compact gasoline engine that is generally connected to a backward end of the operation tube. The operation tube may be provided with a handle.

An example of the rotary body includes a rotary blade made of a metal circular plate that is formed with a circumferential saw blade. For example, as disclosed in the following patent literature 1, a rotary shaft of the rotary blade normally intersects with an axis of the operation tube. This is for making the rotary blade as parallel as possible to the ground surface where a cutting operation is to be performed. The cutting operation is performed by an operator, who holds the cutter and swings the operation tube to move the rotary blade along the ground surface.

However, the ground surface as a cutting target is not always flat, but may be a forwardly ascending slope or a forwardly descending slope. If the intersecting angle of the rotary shaft of the rotary blade, relative to the axis of the operation tube, is fixed, it is necessary to hold the backward end of the operation tube up or down for make the rotary blade parallel to the ground surface, which makes the cutting operation troublesome. Even in a cutting operation at a flat ground surface, a tall operator needs to lower the backward end of the operation tube, while a short operator needs to raise the backward end of the operation tube, thereby making the cutting operation troublesome. When an engine is connected to the backward end of the operation tube, the cutting operation becomes further troublesome due to the weight of the engine.

For example, as disclosed in the following patent literature 2, use may be made of a conventional cutter, in which the posture angle of the rotary shaft of the rotary blade can be adjusted relative to the axis of the operation tube, according to the inclination of the target ground or to the height of the operator. Due to this structure, the backward end of the operation tube can be maintained at a height suitable for the operator, while the rotary blade is parallel to the ground.
Patent literature 1: JP-A-S63-56214
Patent literature 2: JP-Y-H03-17619

The conventional cutter disclosed in the patent literature 2 includes a supporting rod extending obliquely downward toward the forward end of the operation tube, a rotary blade provided pivotally about an axis perpendicular to the axis of the operation tube, a flexible tube extending along the operation tube, and a flexible transmission shaft extending within the flexible tube. The rotary blade is rotated by a power from the engine transmitted via the transmission shaft. The cutter further includes a sliding pipe fitted around the operation tube and is moved relative to the operation tube against the urging force of a compressed spring, thereby adjusting the posture angle of the rotary blade.

However, the above cutter requires a relatively large strength to slide the sliding pipe relative to the operation tube. Further, as the posture angle of the rotary blade is not adjusted directly, but adjusted indirectly by sliding the sliding pipe relative to the operation tube, the posture angle of the rotary blade cannot be adjusted always properly relative to the inclination of the target ground.

### DISCLOSURE OF THE INVENTION

The present invention has been conceived under the above-described circumstances. It is therefore an object of the present invention to provide a portable powered cutter in which a posture angle of a rotary blade can be easily adjusted relative to an axis of the operation tube.

According to the present invention, a portable powered cutter comprises a power source, an operation tube connected to the power source, a blade holder connected to a forward end of the operation tube, a rotary blade supported by the blade holder; and a transmission shaft inserted through the operation tube for transmitting rotational output of the power source to the rotary blade. The blade holder is pivotable about a transverse axis perpendicular to a longitudinal axis of the operation tube by pressing the rotary blade against a ground surface, and the blade holder is held at a selected pivotal position by a friction mechanism or an engaging mechanism. The transmission shaft is flexible at least at a portion between the forward end of the operation tube and the blade holder, and the flexible portion of the transmission shaft is inserted through a flexible tube.

Preferably, the forward end of the operation tube is provided with a first connector while the blade holder is provided with a second connector pivotally connected to the first connector. Each of the first connector and the second connector is formed with a shaft insertion hole through which the transmission shaft is inserted and in which the flexible tube is accommodated.

Preferably, the shaft insertion holes formed at the first connector and the second connector flare toward the transverse axis.

Preferably, the first connector comprises at least one first connecting wall, while the second connector comprises at least one second connecting wall contacting the first connecting wall. The at least one first connecting wall is pivotally connected to the at least one second connecting wall by a bolt, and the bolt providing the transverse axis.

According to a preferred embodiment of the present invention, the bolt comprises a head, a spring being provided between the head and the second connecting wall, and the bolt cooperates with the spring to serve as the friction mechanism.

According to another preferred embodiment of the present invention, one of the first connecting wall and the second connecting wall is provided with a plurality of engaging recesses, while the other of the first connecting wall and the second connecting wall is provided with an engaging member urged by a spring for engaging with a selected one of the engaging recesses. The engaging recesses cooperate with the engaging member to serve as the engaging mechanism.

Preferably, the engaging member is an engaging ball or an engaging pin urged by the spring. The engaging pin is retractable by an operation device provided at the operation tube.

According to still another preferred embodiment of the present invention, the friction mechanism is a braking mechanism operated by an operation device provided at the operation tube.

Preferably, the braking mechanism comprises a brake drum provided at the second connector to be coaxial with the transverse axis, and a brake band wound around the brake drum. The brake band is connected to the operation device.

Preferably, the operation device comprises a lever provided at the operation tube and a cable connected to the lever and to the brake band. The lever is pivoted in a direction to tighten the brake band around the brake drum.

Preferably, the operation device further comprises a latch mechanism for preventing the lever from pivoting back after pivoting in a direction through a predetermined angle, and also comprises a release mechanism for releasing the latch.

Preferably, an end of the flexible tube is fixed to the shaft insertion holes of one of the first connector and of the second connector, while the other end of the flexible tube is axially slidably held in the shaft insertion hose of the other of the first connector and of the second connector.

Preferably, the flexible tube is a metal bellows.

Preferably, the blade holder comprises an input shaft connected to the forward end of the transmission shaft, and also comprises a blade mounting shaft connected to the input shaft via a bevel gear mechanism. An extension of the input shaft intersects with an intermediate part of the blade mounting shaft.

The transverse axis may be offset downward from the longitudinal axis of the operation tube.

Other features and advantages will be apparent from the following description of the embodiments with reference to the accompanying drawings.

### BRIEF DESCRIPTION OF THE DRAWINGS

Fig. 1 is an overall perspective view illustrating a portable powered cutter according to a first embodiment of the present invention.
Fig. 2 is a sectional view taken along lines II-II in Fig. 1.
Fig. 3 is a sectional view taken along lines III-III in Fig. 1.
Fig. 4 is a partial sectional view as viewed in the direction of an arrow IV in Fig. 1.
Fig. 5 is a sectional view taken along lines V-V in Fig. 3.
Fig. 6 is a sectional view illustrating a portable powered cutter according to a second embodiment of the present invention.
Fig. 7 is a sectional view taken along lines VII-VII in Fig. 6.
Fig. 8 is a sectional view illustrating a portable powered cutter according to a third embodiment of the present invention.
Fig. 9 is a sectional view taken along lines IX-IX in Fig. 8.
Fig. 10 is a sectional view illustrating a portable powered cutter according to a fourth embodiment of the present invention.
Fig. 11 is a partial sectional view, as viewed from the side, illustrating the portable powered cutter of Fig. 10.
Fig. 12 is a sectional view taken along lines XII-XII in Fig. 11.
Fig. 13 is a partial sectional view, as viewed from the side, taken along XIII-XIII in Fig. 12.
Fig. 14 is a sectional view taken along lines XIV-XIV in Fig. 12.
Fig. 15 is a sectional view taken along liens XV-XV in Fig. 13.
Fig. 16 is a partial sectional view, as viewed from the side, illustrating an operation device of the portable powered cutter in Fig. 10.
Fig. 17 is a sectional view taken along lines XVII-XVII in Fig. 16.
Fig. 18 is a partial sectional view, as viewed from the side, illustrating the operation device in a latched manner.
Fig. 19 is a sectional view taken along XIX-XIX lines in Fig. 18.
Fig. 20 is a sectional view illustrating a portable powered cutter according to a fifth embodiment of the present invention.
Fig. 21 is a sectional view taken along XXI-XXI lines in Fig. 20.

### BEST MODE FOR CARRYING OUT THE INVENTION

Preferred embodiments of the present invention are specifically described below with reference to the accompanying drawings.

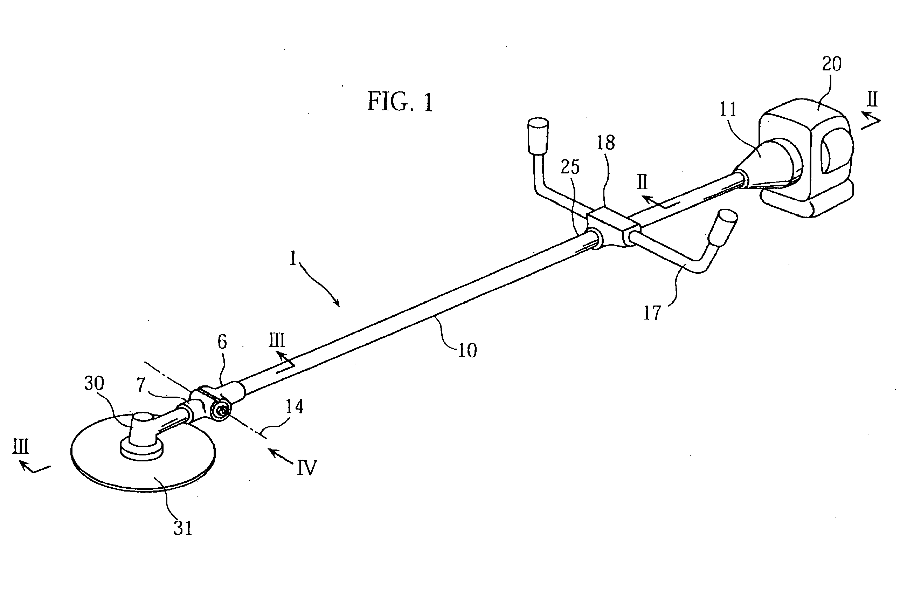

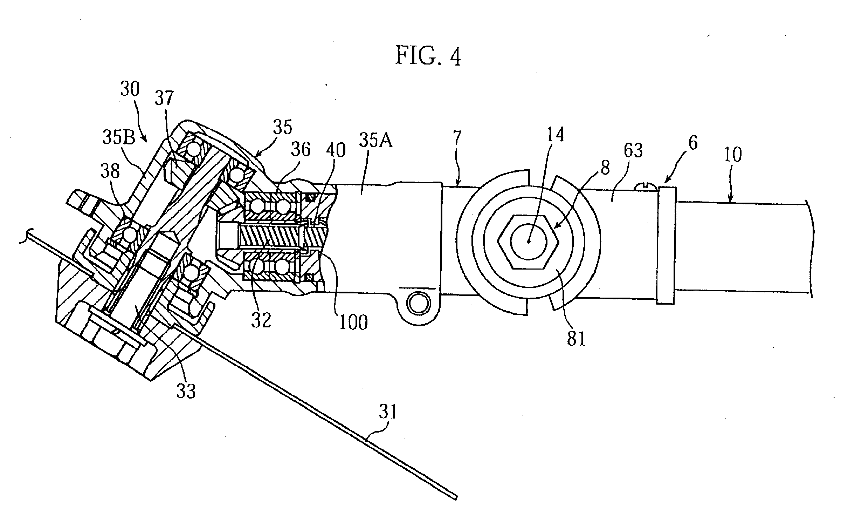

Figs. 1-5 illustrate a portable powered cutting machine 1 according to a first embodiment of the present invention. As shown in Fig. 1, the cutting machine 1 basically includes an operation tube 10, a compact engine 20 connected to the rear side of the operation tube 10, and a rotary blade 31 supported at the forward end of the operation tube 10. The rotational output of the compact engine 20 is transmitted to the rotary blade 31 via a transmission shaft 40 accommodated within the operation tube 10.

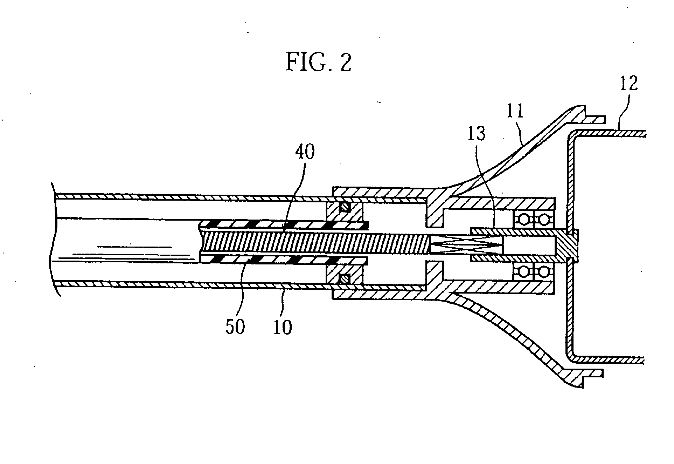

The operation tube 10 is made of a pipe of a light metal such as aluminum. As well shown in Fig. 2, the backward end of the operation tube 10 is integrally attached to a clutch housing 11. The clutch housing 11 is connected to a body of the engine 20, and thus the operation tube 10 is connected to the engine 20. A clutch drum 12 is rotatably supported within the clutch housing 11 at its shaft, and the shaft 13 of the clutch drum 12 is connected to the backward end of the transmission shaft 40. The clutch drum 12 cooperates with a clutch shoe (not shown) of the engine to form a centrifugal clutch. When the engine 20 is revved up by operating a throttle lever (not shown), the rotational output of the engine 20 is transmitted to the clutch drum 12 by the centrifugal clutch, thereby rotating the transmission shaft 40.

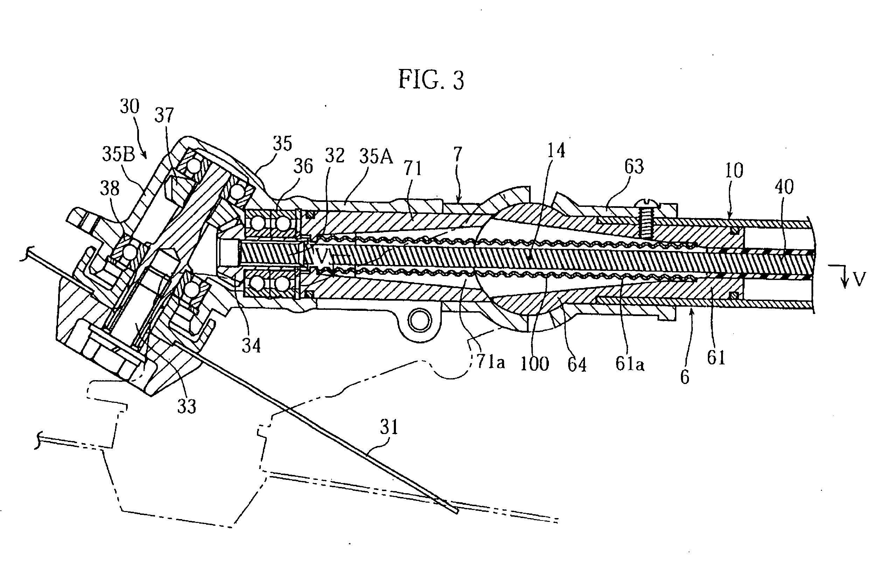

The forward end of the operation tube 10 is provided with a blade holder 30 (see Fig. 1) . As shown in Fig. 3, the blade holder 30 includes a housing 35 having a tubular neck 35A and a tubular head 35B. The housing 35 accommodates an input shaft 32 connected to the transmission shaft 40 and a blade mounting shaft 33 connected to the input shaft 32 via a bevel gear mechanism. The input shaft 32 is provided with a first bevel gear 34 at its forward end, and is rotatably supported in the tubular neck 35A of the housing 35 via a bearing 36. The blade mounting shaft 33 is provided, at its backward end, with a second bevel gear 37 that engages with the first bevel gear 34, and is supported in the tubular head 35B of the housing 35 via a bearing 38. The input shaft 32 and the blade mounting shaft 33 of the blade holder 30 are connected to each other at an angle of about 120 degrees. The rotary blade 31 is attached to the forward end of the blade mounting shaft 33. The rotary blade 31 may be, for example a metal circular plate that is formed with a circumferential saw blade, or is provided with a supersteel chip blade.

As shown in Fig. 1, the operation tube 10 is provided with a laterally elongated handle 17 attached via a bracket 18 at its intermediate portion close to the backward end. The above-described throttle lever (not shown) for controlling the revolutions of the engine 20 is attached to a proper portion of the operation tube 10.

The blade holder 30 connected to the forward end of the operation tube 10 is pivotable about a transverse axis 14. In the illustrated embodiment, the transverse axis 14 extends substantially perpendicular to the longitudinal axis of the operation tube 10.

A first connector 6 is integrated with the forward end of the operation tube 10. A second connector 7 is integrated with the tubular neck 35A of the housing 35 of the blade holder 30. The first connector 6 and the second connector 7 are connected to each other, pivotally about the transverse axis 14 under a predetermined resistance.

As shown in Figs. 3-5, the first connector 6 includes an inner tube 61 fitted within the operation tube 10, a laterally spaced pair of first connecting walls 62 each substantially circular in a side view and each extending from the inner tube 61 toward the forward end, and an outer tube 63 fitted around the operation tube. The first connecting walls 62 face to each other across a space for accommodating the transmission shaft 40 and a metal bellows 100 fitted around the shaft. The first connecting walls 62 are connected to each other at a bridging portion 64 connected to the outer tube 63, so that the space between the first connecting walls 62 is prevented from being unexpectedly narrowed. The inner tube 61 of the first connector 6 is formed with a transmission shaft insertion hole 61a penetrating in the longitudinal direction. The vertical size of the shaft insertion hole 61a is increased as proceeding toward the forward end of the inner tube 61.

As shown in Figs. 3-5, the second connector 7 includes an inner tube 71 fitted into the tubular neck 35A of the blade holder 30. The inner tube 71 includes a rear projection 71b formed with a laterally spaced pair of second connecting walls 72 each substantially circular in a side view and each contacting a respective one of the outer surfaces of the pair of first connecting walls 62 of the first connector 6. The inner tube 71 and the projection 71b of the second connector 7 is formed with a transmission shaft insertion hole 71a penetrating in the longitudinal direction. The vertical size of the shaft insertion hole 71a is increased as proceeding rearward.

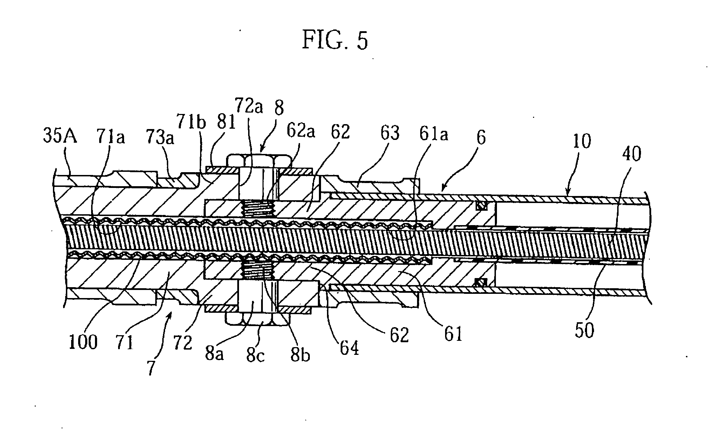

As shown in Fig. 5, the first connector 6 and the second connector 7 are pivotally connected to each other by two bolts 8, each extending in the lateral direction of a respective one of the first connecting walls 62 and a respective one of the second connecting walls 72, sandwiching the transmission shaft 40 and the metal bellows 100 fitted around the shaft. Specifically, each of the first connecting walls 62 is formed with a screw hole 62a and each of the second connecting walls 72 is formed with a hole 72a larger than the screw hole 62a in diameter. Each of the bolts 8 includes a shank 8a fitted in the hole 72a, an external thread portion 8b formed at a forward end of the shank 8a, and a head 8c formed at a backward end of the shank 8a. The external thread portion 8b is screwed into the screw hole 62a until the second connecting wall 72 of the inner tube 71 contacts with the outer surface of the first connecting wall 62. A Belleville spring 81 is pressed between the head 8c of the bolt 8 and the outer surface of the second connecting wall 72 under a predetermined pressure. The Belleville spring 81 presses the second connecting wall 72 toward the outer surface of the first connecting wall 62, so that a predetermined frictional force is generated between the outer surface of the first connecting wall 62 and the inner surface of the second connecting wall 72. In this way, the second connector 7 is connected to the first connector 6, pivotally about the axis (coaxial with the transverse axis 14) of the bolt 8 under a predetermined frictional resistance. One of the two bolts 8 and its corresponding Belleville spring 81 may be omitted.

The transmission shaft 40 needs to be flexible at least at a portion to be inserted through the shaft insertion holes 61a, 71a of the first connector 6 and the second connector 7. In the illustrated embodiment, the transmission shaft 40 is a so-called flexible shaft. The flexible shaft is made by densely winding a thin metallic wire around a thin metal core several times, to effectively transmit the rotation moment, and to be easily bendable.

In the illustrated embodiment, the flexible transmission shaft 40 accommodated in the operation tube 10 is inserted through a supporting tube 50 made of e.g. resin, and stably rotates in the supporting tube 50 without its center swaying. The supporting tube 50 is substantially fixed to the backward end of the operation tube 10 at its backward end, while being fixed to the backward end of the inner tube 61 of the first connector 6 at its forward end.

The flexible transmission shaft 40 is covered with the metal bellows 100 at its portion accommodated in the first connector 6 and the second connector 7. The bellows 100 is fitted into the shaft insertion hole 61a of the first connector 6 at its backward end, while being fitted into the shaft insertion hole 71a of the second connector 7 at its forward end.

As described above, the transmission shaft 40 is connected to the shaft 13 of the clutch drum 12 at its backward end, while being connected to the input shaft 32 of the blade holder 30 at its forward end. In this structure, each end of the transmission shaft 40 is preferably formed as a poligonal or a splined shaft, and the connecting end of the shaft 13 of the clutch drum 12 or the connecting end of the input shaft 32 may be formed with a square hole or a spline-shaped hole for receiving the square or spline-shaped end of the transmission shaft 40, so that the transmission shaft 40 may slightly play in the axial direction.

In the above structure, when an external force is applied to the blade holder 30 (or the rotary blade 31), the second connector 7 is pivoted about the transverse axis 14 relative to the first connector 6 under a predetermined frictional resistance. Here, the angle of the blade holder 30 (or the rotary blade 31) is changed relative to the operation tube 10, and the changed angle is maintained in turn. As the transmission shaft 40, at its portion accommodated in the first connector 6 and the second connector 7, is flexible and is covered with a metal bellows 100, the transmission shaft 40 and the metal bellows 100 may not unduly disturb the pivotal movement of the second connector 7 relative to the first connector 6. Further, as the shaft insertion holes 61a, 71a formed at the inner tubes 61, 71 of the first connector 6 and the second connector 7 flare toward the transverse axis 14, even if the connection between the first connector 6 and the second connector 7 is changed from a linear extending status to a pivoting status about the transverse axis 14 as shown in Fig. 3, the transmission shaft 40 and the metal bellows 100 fitted around the shaft can be loosely bent within the shaft insertion holes 61a, 71a. Thus, the transmission shaft 40 and the metal bellows 100 are prevented from receiving a forcible bending force, and the transmission shaft 40 can smoothly rotate within the metal bellows 100 without its center swaying.

In addition, as the transmission shaft 40 is not exposed but is protected by the metal bellows 100 at the connecting portion of the first connector 6 and the second connector 7, the transmission shaft 40 is prevented from being damaged due to contact with external dust or dirt.

In cutting operation using the portable powered cutter 1, an operator grips the handle 17 and swings the operation tube 10 from side to side, to move the rotating rotary blade 31 along the ground surface. When the angle of the rotary blade 31 needs to be changed, the throttle lever is operated to stop the rotation of the rotary blade 31, and then a proper portion of the rotary blade 31 is pressed onto the ground. For example, when a distal side of the rotary blade 31 is pressed onto the ground, the rotary blade 31 is rotated clockwise about the transverse axis 14. On the other hand, when a proximal side of the rotary blade 31 is pressed onto the ground, the rotary blade is rotated counterclockwise about the transverse axis 14. The operation to press a proper portion of the rotary blade 31 onto the ground is similar to the normal cutting operation where the operation tube 10 is moved up and down or back and forth. Thus, the portable powered cutter 1 according to the above-described embodiment can change the angle of the rotary blade 31 without operating any additional operation member.

As a result, when performing the cutting operation at a forwardly ascending slope, a forwardly descending slope, or a slope of a bank, the rotary blade 31 can be properly postured according to the slopes. Further, such angle change of the rotary blade 31 can be performed quickly and easily.

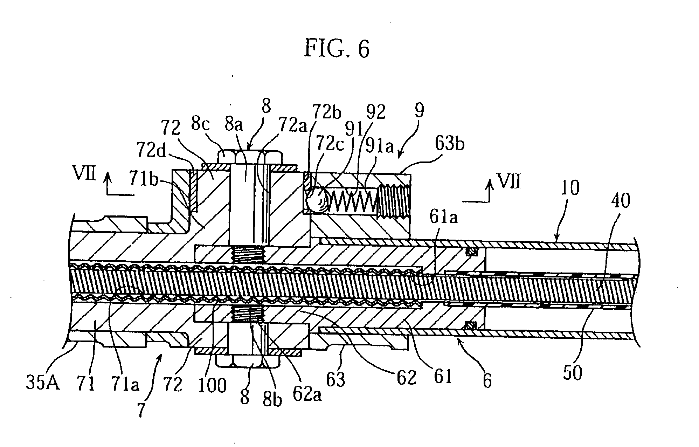

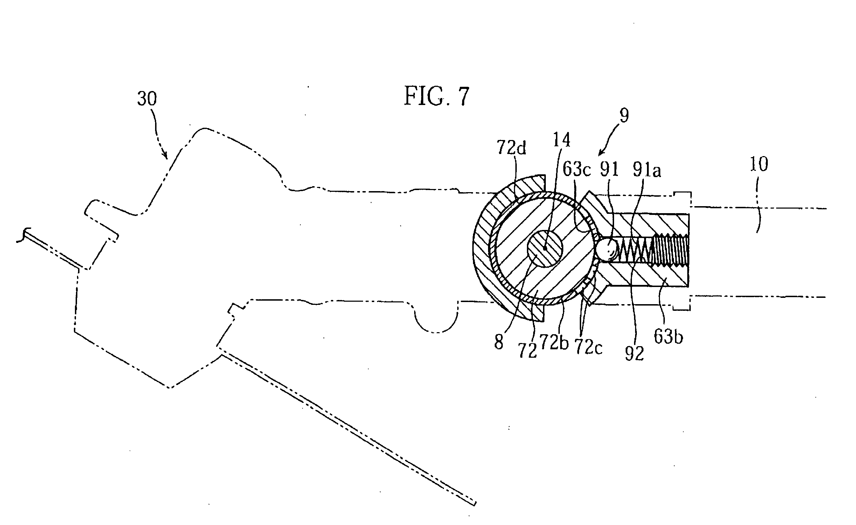

Figs. 6 and 7 illustrate a portable powered cutter according to a second embodiment of the present invention. The second embodiment is similar to the first embodiment in that the first connector 6 integrated with the operation tube 10 and the second connector 7 integrated with the blade holder 30 are connected to each other and are pivotable about the transverse axis 14 that is substantially perpendicular to the axis of the operation tube 10. In the second embodiment, the second connector 7 is suitably clicked at predetermined angular positions relative to the first connector 6.

The present embodiment has a structure for pivotally connecting the second connector 7 to the first connector 6, similarly to the first embodiment. Thus, elements common to the embodiments are given the same reference numbers and description will be omitted, but only different points will be described below.

In the second embodiment, the first connector 6 includes an extension 63b laterally projecting from the outer tube 63. The extension 63b is formed with an accommodating hole (holding portion) 92 for accommodating a steel engaging ball 91 as an element of a stepwise engaging mechanism 9, and a compressed coil spring 91a that constantly urges the engaging ball 91 forwardly.

One of the pair of second connecting walls 72 of the second connector 7 has a thickness larger than the other second connecting wall (hereafter the second connecting wall having a large thickness is referred to as "enlarged second connecting wall"). The enlarged second connecting wall 72 includes a circumferential outer surface 72b provided with a plurality of engaging recesses 72c as an element of the stepwise engaging mechanism 9. The corresponding bolt 8 is elongated according to the thickness of the enlarged second connecting wall 72.

In the second embodiment illustrated in Figs. 6 and 7, the circumferential outer surface 72b of the enlarged second connecting wall 72 is fitted with a ring 72d formed with a plurality of openings spaced from each other cirucumferentially. These openings serve as the plurality of engaging recesses 72c. The engaging ball 91, urged by the compressed coil spring 91a, engages with a selected one of the engaging recesses 72c in a manner. Such engagement between the plurality of engaging recesses 72c and the forwardly urged engaging ball 91 (engaging member) makes the stepwise engaging mechanism 9 to click the position of the second connector 7 relative to the first connector 6 in pivotal movement about the transverse axis 14.

In the above structure, when an external force is applied to the blade holder 30 or the rotary blade 31, resisting the engaging force of the stepwise engaging mechanism 9, the second connector 7 is pivoted about the transverse axis 14 through a desired angle relative to the first connector 6. In this way, the posture angle of the blade holder 30 and the rotary blade 31 is changed relative to the operation tube 10, and is maintained at a predetermined angle by engaging the engaging ball 91 with one of the engaging recesses 72c. As a result, in the present embodiment, the stepwise engaging mechanism 9 maintains the posture angle of the rotary blade 31 after changing, while easily realizing a desired posture.

The second embodiment is similar to the first embodiment in that, when the posture angle of the rotary blade 31 needs to be changed, the rotation of the rotary blade 31 is stopped and then a proper portion of the rotary blade 31 is pressed onto the ground. Thus, the posture angle of the rotary blade 31 can be easily changed without operating any additional operation member. The second embodiment also provides other advantages described in the first embodiment.

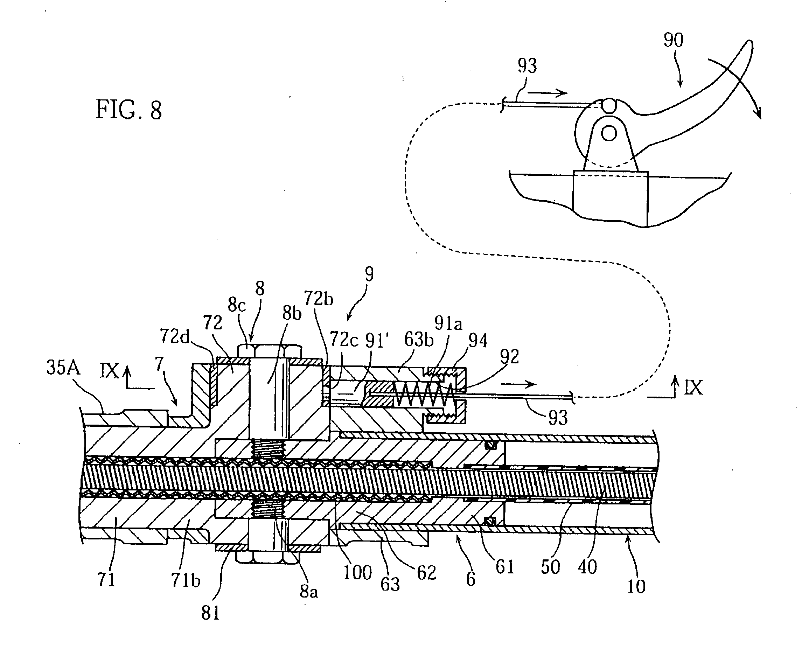

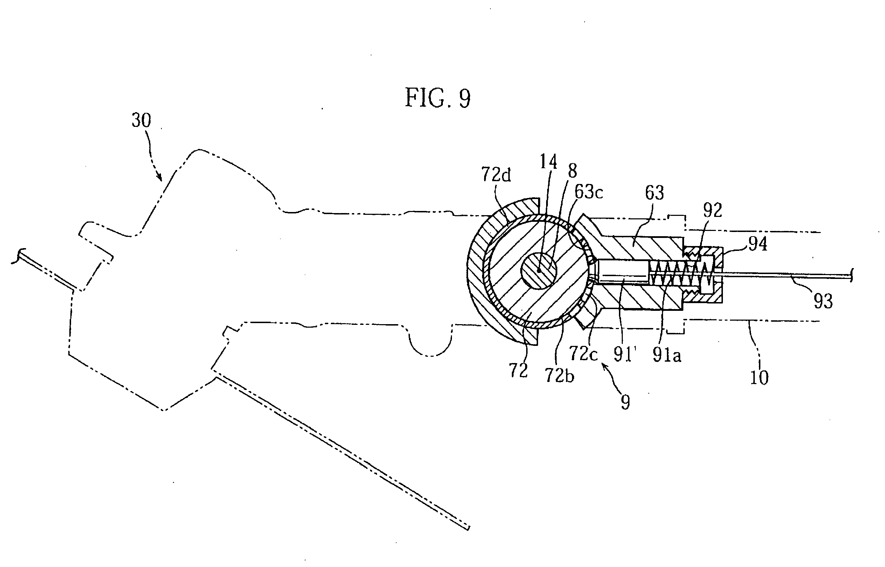

Figs. 8 and 9 illustrate a third embodiment of the present invention. The third embodiment is similar to the above-described second embodiment except in the following points. Specifically, in the third embodiment, the engaging ball 91 of the second embodiment is replaced with an engaging pin 91' urged toward the circumferential outer surface 72b of the enlarged connecting wall 72.

More specifically, as shown in Fig. 8, the extension 63b formed at the outer tube 63 of the first connector 6 is formed with an accommodating hole 92 parallel to the axis of the operation tube 10, and the engaging pin 91' is loaded in an axially slidable manner within the accommodating hole 92. The engaging pin 91 is urged by the compressed coil spring 91a toward the circumferential outer surface 72b of the enlarged second connecting wall 72. The backward end of the engaging pin 91' is connected to an end of a cable 93, and the other end of the cable 93 is connected to a lever 90 attached to a proper portion of the operation tube 10. In this structure, the cable 93 can be pulled by operating the lever 90 to pull the engaging pin 91' backward. The backward end of the accommodating hole 92 includes an opening that is closed by a cap 94.

The Belleville spring 81 applies resistance against the pivotal movement of the first connector 6 and the second connector 7, less firmly than in the second embodiment. In this case, the bolt 8 is fastened less tightly.

When the engaging pin 91' engages with any one of the plurality of engaging recesses 72c, the second connector 7 or the blade holder 30 is fixed at a predetermined posture angle relative to the first connector 6 or the operation tube 10. When the lever 90 is operated to pull the cable 93, the engaging pin 91 is forced to retract, thereby releasing the engagement with the corresponding engaging recess 72c. In this state, the second connector 7 and the blade holder 30 can freely pivot about the transverse axis 14. Then, the rotary blade 31 is stopped and is pressed onto the ground at a proper portion, so that the rotary blade 31 is brought into a predetermined posture angle, and then the lever 90 is released. Here, if any one of the engaging recesses 72c is on the axis of the engaging pin 91', the engaging pin 91' engages with the corresponding engaging recess 72c, and the posture angle of the second connector 7 and the blade holder 30 is fixed. If no engaging recess 72c is on the axis of the engaging pin 91', the engaging pin 91' slides over the circumference of the enlarged second connecting wall 71. The second connector 7 pivots until any one of the engaging recesses 72c comes to the position facing the engaging pin 91', and the engaging pin 91' automatically engages with the corresponding engaging recess 72c, whereby the posture angle of the second connector 7, the blade holder 30 and the rotary blade 31 is fixed.

The elements in the third embodiment other than those described above are similar to those in the above-described first and second embodiments.

In the third embodiment, operation of the lever 90 is necessary to change the posture angle of the rotary blade 31. However, due to the less firm resistance against the pivotal movement of the first connector 6 and the second connector 7, when the engaging pin 91' is forced to retract from the engaging recess 72c, the second connector 7 and the blade holder 30 can be easily pivoted relative to the operation tube 10, thereby changing the posture angle of the rotary blade 31 easily and quickly.

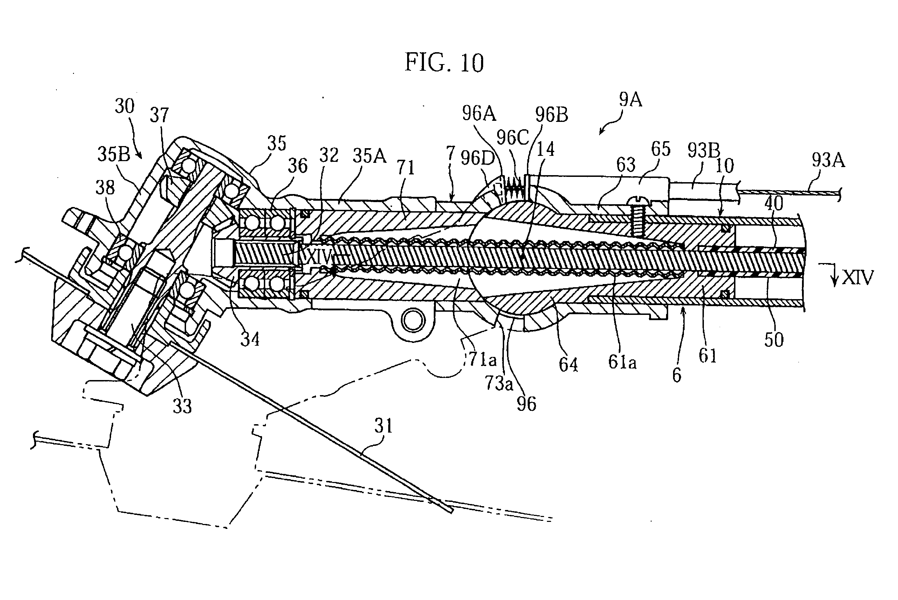

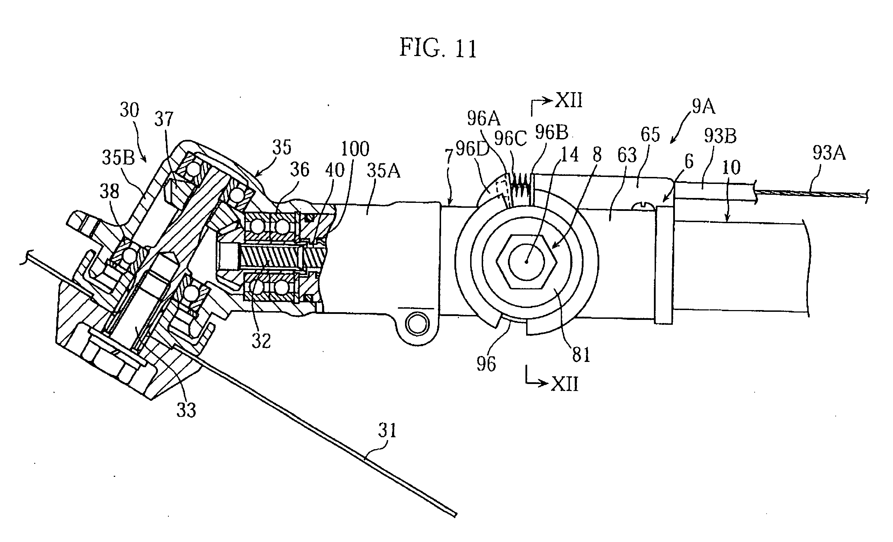

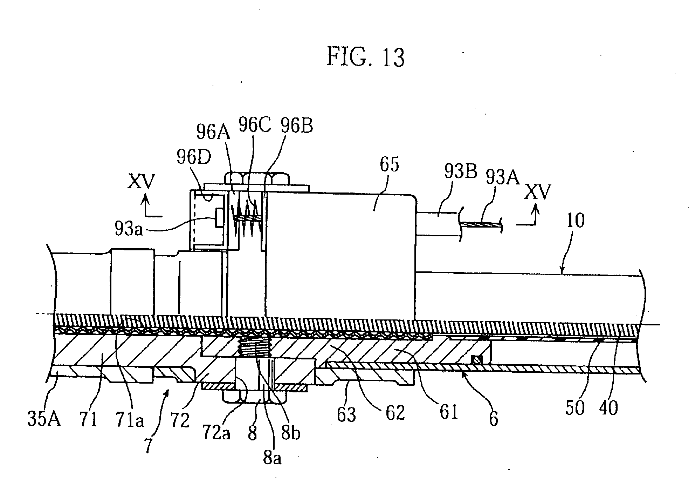

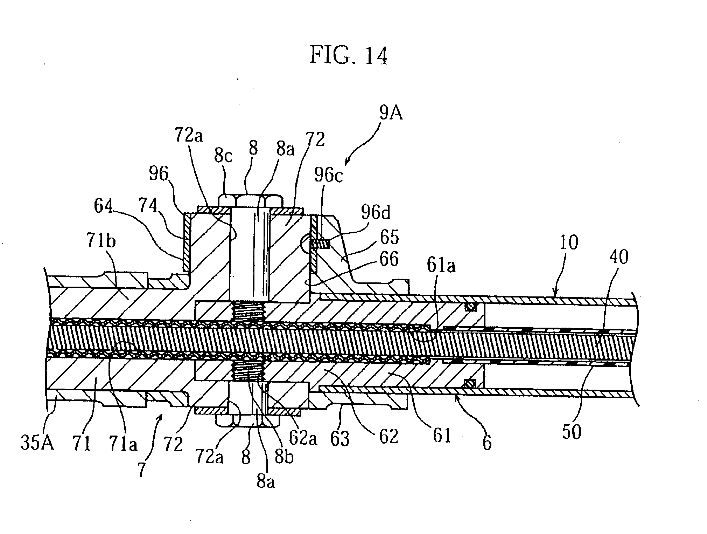

Figs. 10-19 illustrate a portable powered cutter according to a fourth embodiment of the present invention. In the fourth embodiment, a braking mechanism 9A provided with a so-called band brake mechanism is used for maintaining the posture of the blade holder 30 after being pivoted through a desired angle by pivoting the second connector 7 relative to the first connector 6.

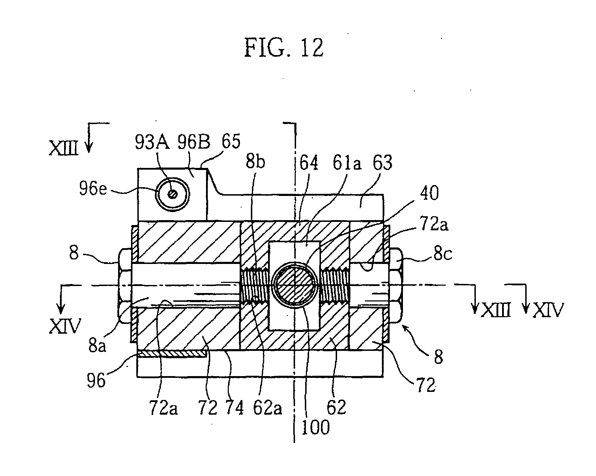

Specifically, as seen from Figs. 12-15, the enlarged second connecting wall 72 of the second connector 7 includes a circumferential outer surface serving as a brake drum 74. The brake drum 74 is wound with a brake band 96 including an end connected to a proper portion of the first connector 6, and the other end of the brake band 96 is pulled by a cable 93A.

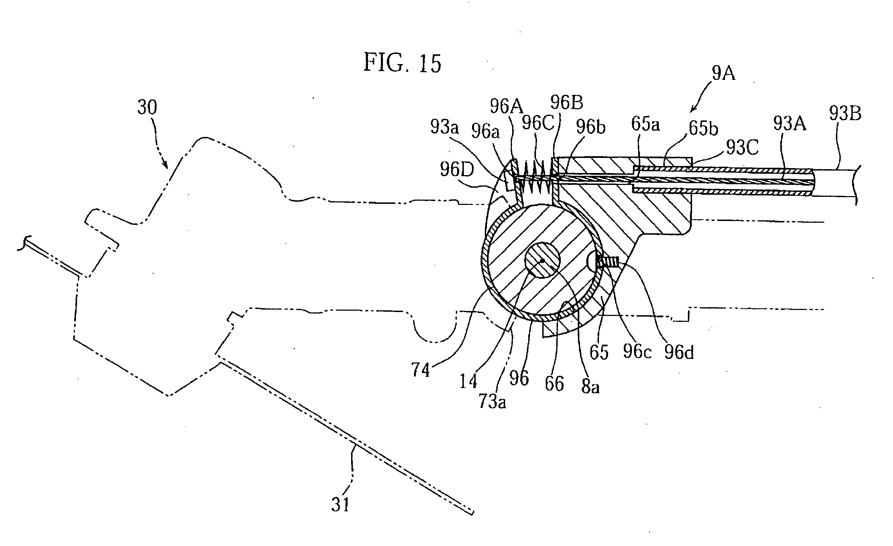

The outer tube 63 of the first connector 6 is formed with an extension 65 projecting laterally and vertically relative to the operation tube 10, and the front surface of the extension 65 is formed with a substantially semi-cylindrical band supporting surface 66 facing the circumference of the brake drum 74. The brake band 96 is made of a metal band having a predetermined width, and includes vertical flanges 96A, 96B, one on each side end. Each side end of the front vertical flange 96A is formed with a strengthening rib 96D for maintaining its vertical condition relative to the intermediate portion of the band. As shown in Fig. 15, the band supporting surface 66 covers and supports the rear half of the brake band 96 and the rear vertical flange 96B above the rear half. The brake band 96 is formed with a through-hole 96c, and a screw 96d inserted into the through-hole 96c is screwed into the band supporting surface 66 to fix the brake band to the band supporting surface 66.

Each of the vertical flanges 96A, 96B of the brake band 96 is formed with a respective one of cable insertion holes 96a, 96b, and the extension 65 is formed with a cable insertion hole 65a corresponding to the cable insertion holes 96a, 96b. The end of the cable 93A is provided with a first nipple 93a positioned on the outer surface of the front vertical flange 96A, and is inserted through the cable insertion holes 96a, 96b of the vertical flanges 96A, 96B and successively into the cable insertion hole 65a of the extension 65. A compressed coil spring 96C is provided between the vertical flanges 96A, 96B and surrounds the cable 93A, to urge the vertical flanges 96A, 96B in opening direction. Thus, the cable 93A is kept elastically urged forwardly. The compressed coil spring 96C may be omitted if the brake band 96 is resilient.

The cable 93A is surrounded by an external sheath 93B, and an end 93C of the external sheath 93B is fixed to a first sheath receiver 65b formed by enlarging the backward end of the cable insertion hole 65a of the extension 65. For example, the cable 93A is positioned along the operation tube 10 and is connected to an operation device 95 attached to a proper portion of the operation tube 10.

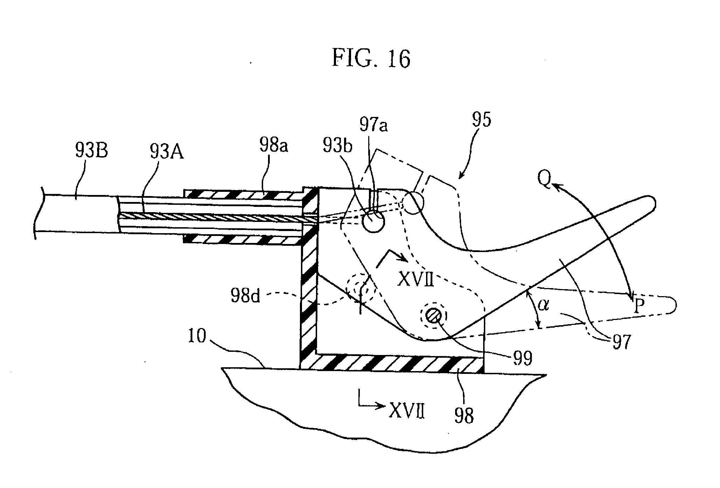

As shown in Figs. 16-19, the operation device 95 includes a base 98 fixed to the operation tube 10 and also includes a lever 97 that is supported by the base 98 and is pivotable about a shaft 99. The cable 93A is connected to the lever 97 at its end including a second nipple 93b that engages with a nipple supporting hole 97a provided at the lever 97. The external sheath 93B is held at a second sheath receiver 98a integrated with the base 98. When the lever 97 is pivoted in the direction P in Fig. 16, the cable 93A is pulled out relative to the external sheath 93B. Oppositely, when the lever 97 is pivoted back in the direction Q in Fig. 16, the cable 93A is pulled in relative to the external sheath 93B. The lever 97 is pivoted in the direction P by the operator, while being pivoted back in the direction Q by the restoring force of the compressed coil spring 96C (see Fig. 15).

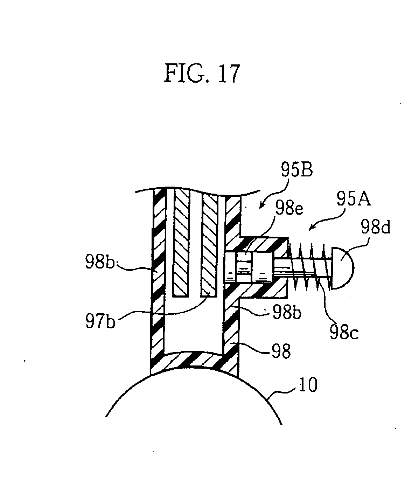

The operation device 95 further includes a latch mechanism 95A for maintaining the pivoted posture of the lever 97 at the position where the lever 97 is pivoted in the direction P through a predetermined angle, and also includes a release mechanism 95B for releasing the latch. Specifically, as shown in Fig. 17, the base 98 includes a pair of side walls 98b, one on each side of the lever arm 97, and one side wall 98b is provided with a pin 98d constantly urged outwardly by a spring 98c. The outer surface of the inner end of the pin 98d is formed with an engaging groove 98e having a predetermined width. The lever 97 is provided with an engaging portion 97b that comes into contact with the pin 98d, when the lever is positioned within a predetermined pivotal angular range α (see Fig. 16), and has a width corresponding to the width of the engaging groove 98e of the pin 98d.

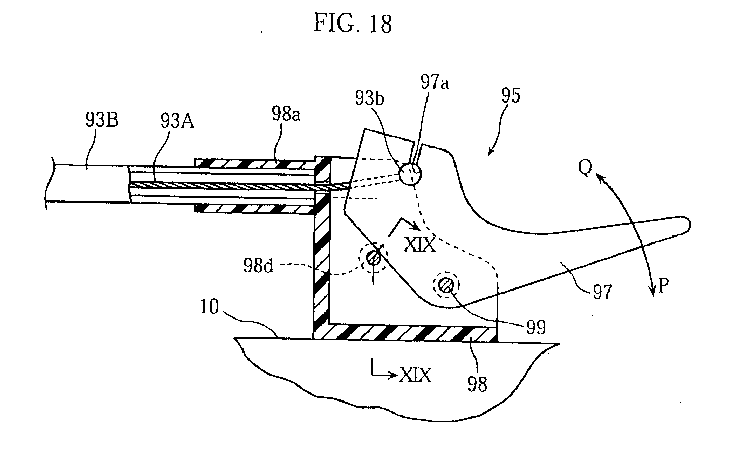

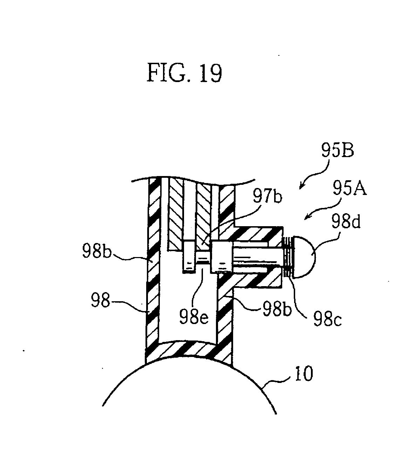

As shown by phantom lines in Fig. 16, when the lever 97 is pivoted in the direction P through a predetermined angle, the pin 98d does not contact the lever 97. Here, the pin 98d is pressed against the restoring force of the spring 98c and then the lever 97 is released so that the lever 97 is automatically pivoted back in the direction Q by the restoring force of the cable 93A. Then, as shown in Figs. 18 and 19, the engaging portion 97b engages the engaging groove 98e of the pin 98d to prevent the lever from being pivoted back in the direction Q thereafter.. As the engaging groove 98e engages with the engaging portion 97b of the lever 97, the pin 98d is held in the pressed position without retracting. In this way, the latch mechanism 95A maintains the posture of the lever 97 pivoted in the direction P through a predetermined angle.

When the latched lever 97 is pivoted in the direction P, the pin 98d automatically returns to the initial position due to the restoring force of the spring 98c, thereby releasing the engagement between the engaging portion 97b of the lever 97 and the engaging groove 98e of the pin 98d. Then, the lever 97 is released and automatically returns in the direction Q. In this way, the release mechanism 95B releases the latch of the latch mechanism 95A.

The latch mechanism 95A and the release mechanism 95B are not limited to the above-described structure, but for example, the lever 97 may be automatically latched when pivoted in the direction P through a predetermined angle, and the latch mechanism 95A may be released by operating a button.

In the above structure, when the lever 97 of the operation device 95 is pivoted in the direction P through a predetermined angle and then is latched, the brake band 96 is tightened around the brake drum 74 to apply a braking force to the rotation of the brake drum 74. In this state, the second connector 7 is prevented from pivoting about the transverse axis 14 relative to the first connector 6. As the contacting surface between the brake band 96 and the brake drum 74 is relatively large, a large braking force can be obtained to stabilize the posture of the second connector 7 and the blade holder 30.

On the other hand, when the lever 97 of the operation device 95 is released from the latch and the lever 97 returns in the direction Q, the braking force at the brake drum 74 of the brake band 96 is released, and the second connector 7 and the blade holder 30 can freely pivot about the transverse axis 14.

In this state, for example, a proper portion of the rotary blade 31 is pressed onto the ground to desirably adjust the posture angle of the rotary blade 31 relative to the operation tube 10, and then the lever 97 of the operation device 95 is pivoted in the direction P to be latched. In this way, as described above, the second connector 7 and the blade holder 30 are maintained at the posture adjusted by pivoting about the transverse axis 14. As a result, when performing the cutting operation at a forwardly ascending slope, a forwardly descending slope, or a slope of a bank, the rotary blade 31 can be properly postured according to the slopes. Further, such angle change of the rotary blade 31 can be performed quickly and easily.

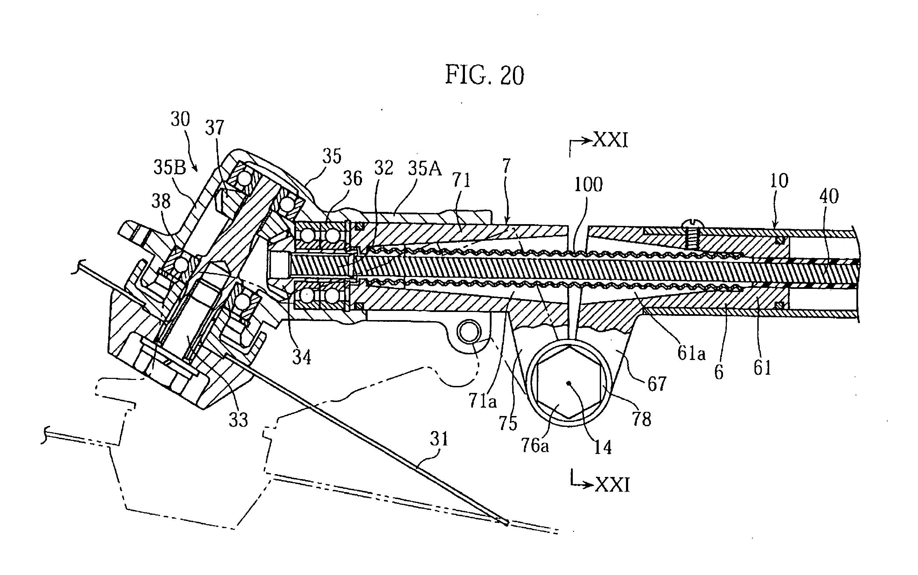

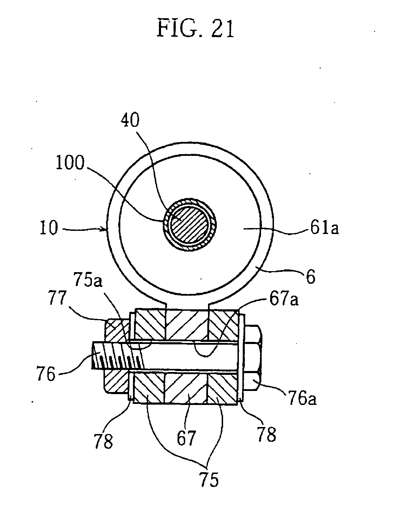

Figs. 20 and 21 illustrate a portable powered cutter according to a fifth embodiment of the present invention. The fifth embodiment differs from the first embodiment shown in Figs. 1-5 in the following points. In the fifth embodiment, the blade holder 30 is supported by the operation tube 10 and is also pivotable about the transverse axis 14 under a predetermined resistance, but the transverse axis 14 is offset downward from the longitudinal axis of the operation tube 10, as shown in Fig. 20.

More specifically, the second connector 7 is integrally formed with a projecting two-way bracket 75, and the first connector 6 is integrally formed with a projecting connecting bracket 67 fitted between two legs of the two-way bracket 75. The brackets 67, 75 are respectively formed with through-holes 67a, 75a. Through these through-holes 67a, 75a, a bolt 76 is inserted, and a nut 77 is screwed at an end of the bolt 76. In this structure, the first connector 6 is connected to the second connector 7, rotatably about an axis of the bolt 76, or about the transverse axis 14. Plate springs 78 are provided between one side of the two-way bracket 75 and a bolt head 76a, and between the other side of the two-way bracket 75 and the nut 77. Therefore, a predetermined frictional resistance is applied between the two-way bracket 75 and the connecting bracket 67, or between the first connector 6 and the second connector 7.

In the present embodiment, a forward end of the metal bellows 100 is fixed to the shaft insertion hole 71a of the second connector 7, and a backward end is held, slidably in the axial direction, by the shaft insertion hole 61a of the first connector 6. The reason for this structure will be described below.

In the above structure, when an external force is applied to the blade holder 30 or the rotary blade 31, against the above-described frictional resistance, the second connector 7 is pivoted about the transverse axis 14 through a predetermined angle relative to the first connector 6. Here, the posture angle of the blade holder 30 or the rotary blade 31 is changed relative to the operation tube 10, and the changed posture angle is maintained by the above frictional resistance. The transmission shaft 40 and the metal accordion hose 100 fitted around the shaft are flexible, and thus prevented from unduly disturbing the pivotal movement of the second connector 7 relative to the first connector 6. The diameter of each of the shaft insertion holes 61a, 71a, through which the transmission shaft 40 and the bellows 100 are inserted, is enlarged as proceeding toward the transverse axis 14. Due to this structure, even if the connection between the first connector 6 and the second connector 7 is changed from a linear extending status to a pivoting status about the transverse axis 14 as shown by phantom lines in Fig. 20, the transmission shaft 40 and the bellows 100 can be loosely bent within the shaft insertion holes 61a, 71a. Thus, the transmission shaft 40 and the metal bellows 100 are prevented from receiving a forcible bending force, and the transmission shaft 40 can smoothly rotate within the metal bellows 100 without its center swaying.

In the fifth embodiment, as the transverse axis 14 is offset downward from the longitudinal axis of the operation tube 10, during the above-described pivoting status of the first connector 6 and the second connector 7, the transmission shaft 40 and the bellows 100 are pulled out of and back into the first connector 6. Such movement is allowed without problem as the transmission shaft 40 is connected to the clutch housing 11 of the engine in a manner such that the transmission shaft 40 is axially slidable (as in the structure shown in Fig. 2) , and as the bellows 100 is held, slidably in the axial direction, by the shaft insertion hole 61a of the first connector 6.

When the posture angle of the rotary blade 31 is to be changed, the rotation of the rotary blade 31 is stopped and a proper portion of the rotary blade 31 is pressed onto the ground. This operation is the same as the first embodiment, and also in the fifth embodiment, the posture angle of the rotary blade can be easily changed without operating any additional operation member.

Of course, the scope of the invention is not limited to the above-described embodiments, though all modifications within the scope of the appended claims are intended to be included in the scope of the present invention.

The first through fourth embodiments are not limited to the structure for supporting the blade holder 30, pivotally about the transverse axis 14, at the tip end of the operation tube 10. For example, in these embodiments, the pair of second connecting walls 72 of the second connector 7 are positioned outside of the pair of first connecting walls 62 of the first connector 6. However, the first connecting walls may be positioned outside of the second connecting walls.

In the second embodiment, the stepwise engaging mechanism 9 includes the plurality of engaging recesses 72c at the circumferential outer surface 72b of the second connecting walls 72 of the second connector 7, and is provided, at the first connector 6, with an engaging ball 91 (engaging member) for engaging with any one of the plurality of engaging recesses 72c. However, contrarily to this structure, the plurality of engaging recesses may be formed at a circumferential inner surface of the first connector 6, and the engaging ball (engaging member) may be provided, at the second connector 7, for engaging with any one of the plurality of engaging recesses.

In the stepwise engaging mechanism 9 in the second embodiment, the plurality of engaging recesses 72c are provided at the circumferential outer surface 72b. However, the plurality of engaging recesses may be provided at the surface of the second connecting wall 72 of the second connector 7, along an arc around the transverse axis 14, and the first connector 6 may be formed with an extension facing the engaging recesses, so that any one of the plurality of engaging recesses engages with the engaging ball 91 (engaging member) provided at the extension.

Further, the metal bellows 100 fitted around the transmission shaft 40 inserted between the first connector 6 and the second connector 7 is not limited to be made of metal. The bellows may be replaced with a flexible protective hose.

In the fifth embodiment, the transverse axis 14 is offset downward form the longitudinal axis of the operation tube, though may be offset above the tube, of course.

## Claims

1. A portable powered cutter comprising: a power source; an operation tube connected to the power source; a blade holder connected to a forward end of the operation tube; a rotary blade supported by the blade holder; and a transmission shaft inserted through the operation tube for transmitting rotational output of the power source to the rotary blade;
wherein the blade holder is pivotable about a transverse axis perpendicular to a longitudinal axis of the operation tube by pressing the rotary blade against a ground surface, the blade holder being held at a selected pivotal position by a friction mechanism or an engaging mechanism,
wherein the transmission shaft is flexible at least at a portion between the forward end of the operation tube and the blade holder, the flexible portion of the transmission shaft being inserted through a flexible tube.

2. The portable powered cutter according to claim 1, wherein the forward end of the operation tube is provided with a first connector while the blade holder is provided with a second connector pivotally connected to the first connector, each of the first connector and the second connector being formed with a shaft insertion hole through which the transmission shaft is inserted and in which the flexible tube is accommodated.

3. The portable powered cutter according to claim 2, wherein the shaft insertion holes formed at the first connector and the second connector flare toward the transverse axis.

4. The portable powered cutter according to claim 2, wherein the first connector comprises at least one first connecting wall, while the second connector comprises at least one second connecting wall contacting the first connecting wall, the at least one first connecting wall being pivotally connected to the at least one second connecting wall by a bolt, the bolt providing the transverse axis.

5. The portable powered cutter according to claim 4, wherein the bolt comprises a head, a spring being provided between the head and the second connecting wall, the bolt cooperating with the spring to serve as the friction mechanism.

6. The portable powered cutter according to claim 4, wherein one of the first connecting wall and the second connecting wall is provided with a plurality of engaging recesses, the other of the first connecting wall and the second connecting wall being provided with an engaging member urged by a spring, the engaging member coming into engagement with a selected one of the engaging recesses, the engaging recesses cooperating with the engaging member to serve as the engaging mechanism.

7. The portable powered cutter according to claim 6, wherein the engaging member is an engaging ball urged by the spring.

8. The portable powered cutter according to claim 6, wherein the engaging member is an engaging pin urged by the spring, the engaging pin being retractable by an operation device provided at the operation tube.

9. The portable powered cutter according to claim 2, wherein the friction mechanism is a braking mechanism operated by an operation device provided at the operation tube.

10. The portable powered cutter according to claim 9, wherein the braking mechanism comprises a brake drum provided at the second connector to be coaxial with the transverse axis, and a brake band wound around the brake drum, the brake band being connected to the operation device.

11. The portable powered cutter according to claim 10, wherein the operation device comprises a lever provided at the operation tube and a cable connected to the lever and to the brake band, the lever being pivoted in a direction to tighten the brake band around the brake drum.

12. The portable powered cutter according to claim 11, wherein the operation device further comprises a latch mechanism for preventing the lever from pivoting back after pivoting in a direction through a predetermined angle, the operation device also comprising a release mechanism for releasing the latch.

13. The portable powered cutter according to claim 2, wherein an end of the flexible tube is fixed to the shaft insertion hole of one of the first connector and of the second connector, the other end of the flexible tube being axially slidably held in the shaft insertion hose of the other of the first connector and of the second connector.

14. The portable powered cutter according to claim 1, wherein the flexible tube is a metal bellows.

15. The portable powered cutter according to claim 1, wherein the blade holder comprises an input shaft connected to the forward end of the transmission shaft, the blade holder also comprising a blade mounting shaft connected to the input shaft via a bevel gear mechanism, an extension of the input shaft intersecting an intermediate part of the blade mounting shaft.

16. The portable powered cutter according to claim 1, wherein the transverse axis is offset downward from the longitudinal axis of the operation tube.
